# EUROPEAN PATENT SPECIFICATION

(11) **EP 2 065 963 B1**
(45) Date of publication and mention of the grant of the patent: **04.08.2010**
(21) Application number: 08020759.0
(22) Date of filing: 28.11.2008
(51) Int. Cl.: H01M 10/50, H01M 2/10

(54) **Battery system cooled via coolant**
Über ein Kühlmittel gekühltes Batteriesystem
Système de batterie refroidi via un agent de refroidissement

(30) Priority: 29.11.2007 JP 2007309000
(43) Date of publication of application: 03.06.2009
(73) Proprietor: Sanyo Electric Co., Ltd., Moriguchi-shi Osaka 570-8677 (JP)
(72) Inventor: Okada, Wataru, Moriguchi-shi Osaka 570-8677 (JP); Shimizu, Hideo, Moriguchi-shi Osaka 570-8677 (JP); Nakamura, Shinsuke, Moriguchi-shi Osaka 570-8677 (JP)
(74) Representative: Hertz, Oliver

(56) References cited:
- WO-A-03/015192
- JP-A- 7 006 796
- US-A- 5 678 760

## Description

### BACKGROUND OF THE INVENTION

### 1. Field of the Invention

The present invention relates to a battery system having a battery block with a plurality of stacked rectangular batteries joined together and cooled via a coolant, and in particular relates to a battery system best suited as a power source for automobile applications such as in a hybrid car.

### 2. Description of the Related Art

A battery system provided with many rectangular batteries can produce higher output voltages and charge and discharge with high currents. In particular, a battery system used as a power source unit for an automobile is discharged at high currents during vehicle acceleration and is charged with high currents under conditions such as regenerative braking. Because temperature rises for a battery system charged and discharged with high currents, forced cooling is implemented via air or coolant. Because of the low heat capacity of air, it is difficult to rapidly air-cool batteries generating considerable amounts of heat. Further, if the amount of ventilation is increased to increase forced air-cooling, it has the additional drawback that noise levels increase. Finally, a forced air-cooling system also has the detrimental effect that dust included in the air deposits inside the system to reduce cooling efficiency over time. These drawbacks are addressed in Japanese Patent Application Disclosure SHO34-16929 (1959), which cites a structure having cooling pipe disposed in thermal contact with batteries, and that cooling pipe is cooled by a coolant.

Document JP 07006796 describes a battery case in which side walls are stood along the peripheral edge of a bottom plate and plural partitioning plates are provided in parallel with each other inside thereof to house batteries. A cap plate is provided in the upper part of the battery case, and a coolant pipeline is embedded in the bottom plate and the partitioning plates. The cooling medium is flowed in this coolant pipeline to cool the multiple batteries through the bottom of the battery, which contacts with the bottom plate, and the side wall of the battery, which contacts with the partitioning plates. Since a wide cooling area can be obtained, the necessary and the sufficient cooling is performed.
Document WO 03/015192 A2 describes a thermal jacket adapted to accommodate and cool a storage battery placed in the engine compartment of an automobile and exposed to heat at elevated temperatures emanating from the engine. The walls of the rectangular jacket are formed of rigid, foam-plastic material which thermally isolate the battery from the engine.

In Japanese Patent SHO34-16929, cooling pipe is disposed between stacked rectangular batteries. Cooling pipe is chilled by the supply of cooling water to in-turn cool the rectangular batteries. Although this system can efficiently cool rectangular batteries with cooling water, it requires a network of cooling pipe disposed between rectangular batteries.
Arrangement of cooling pipe in a battery system having many stacked rectangular batteries is extremely complicated.

The first object of the present invention addresses this drawback. Thus, the first object is to provide a battery system that can efficiently cool rectangular batteries via cooling pipe, which can be installed easily.

Japanese Patent Application Disclosure HEI2-79567 (1990) cites a simpler structure that can cool a plurality of batteries. This disclosure describes a battery system having a battery block disposed on top of a cooling plate, and the batteries are cooled via that cooling plate. In this battery system, the cooling plate is chilled to cool a plurality of batteries. For example, the cooling plate can be a thick metal plate provided with coolant passageways traversing in the horizontal direction. Coolant can be supplied to those passageways for cooling. However, in addition to the large heat capacity of this cooling plate, there is large thermal resistance between the coolant and the batteries, and rapid, efficient battery cooling is difficult to attain. Battery temperature rise is detected, and the cooling plate is chilled. Time is required to cool the large heat capacity cooling plate itself, and batteries that have risen in temperature cannot be quickly cooled. In addition, since the coolant cools batteries through the intervening cooling plate, cooling efficiency drops by the thermal resistance of the cooling plate. An ideal configuration for cooling batteries via a coolant is a system where the coolant comes in direct contact with the batteries. However, since this ideal configuration requires a unique arrangement of coolant and batteries, it cannot be practically adopted except for special applications.
A configuration that establishes a hollow region inside the cooling plate and disposes cooling pipe in that hollow region can be easily manufactured. Further, in this type of cooling plate, a surface plate to thermally contact batteries can be made thin, cooling pipe thickness can also be made small to reduce heat capacity, and thermal resistance between the coolant and the batteries can be reduced. However, in this configuration, if thermal contact between the cooling pipe and the surface plate is poor, coolant will not be able to efficiently cool the batteries. Further, if the cooling pipe absorbs heat from elements other than the batteries, it will reduce the thermal efficiency of the coolant.

The second object of the present invention addresses these drawbacks. Thus, the second object is to provide a battery system that can rapidly and efficiently cool batteries via coolant while effectively preventing thermal efficiency reduction due to transfer of external heat to the coolant.

### SUMMARY OF THE INVENTION

The objects described above are solved by the features of claim 1. The battery system of claim 1 in particular has a battery block 3, 33 with a plurality of rectangular batteries 1, 31 retained in a stacked configuration by a battery holder 4, 34; a cooling plate 8, 38 disposed in thermal contact with the bottom surface of the battery block 3, 33 and having a hollow region 18, 48 inside; cooling pipe 6, 36 disposed inside the hollow region 18, 48 of the cooling plate 8, 38; and a coolant supply device 7, 37 to supply coolant to the cooling pipe 6, 36.

The hollow cooling plate 8, 38 has a surface plate 8A, 38A that makes thermal contact with the bottom surface of the battery block 3, 33. Cooling pipe 6, 36 is disposed within the hollow region 18, 38 in contact with the inside of the surface plate 8A, 38A. Finally, the cooling plate 8, 38 hollow region 18, 48 is filled with plastic foam 9.

The battery system above has the characteristic that rectangular batteries can be efficiently cooled with cooling pipe that can be arranged in simple fashion. In particular, for a battery system of many stacked rectangular batteries, it has the characteristic that rectangular batteries can be cooled quietly and efficiently with a simple structure. This is because the battery system above has cooling pipe disposed beneath the battery block and coolant is used to cool the rectangular batteries.

The battery system above has the characteristic that batteries can be rapidly and efficiently cooled via coolant while effectively preventing thermal efficiency reduction due to absorption of external heat by the coolant. This is because the battery system above is provided with a hollow region in the battery cooling plate, cooling pipe is disposed in that hollow region, and a surface plate is provided on the cooling plate for thermal contact with the bottom surface of the battery block. Cooling pipe is disposed in contact with the inside of the surface plate and the hollow region of the cooling plate is filled with plastic foam. In this cooling plate, plastic foam filling the hollow region presses the cooling pipe against the surface plate. As a result, cooling pipe makes intimate contact with the surface plate for ideal thermal connection.
Therefore, cooling pipe chilled by coolant can efficiently cool the surface plate, and the surface plate can efficiently cool the batteries. Further, plastic foam filling the hollow region supports and reinforces the surface plate from the inside. This dampens any resonant vibration of the surface plate, and gives the cooling plate a robust structure to support the weight of the heavy battery block loaded on top.

In the battery system of the present invention, urethane foam can be used as the plastic foam 9 for filling the hollow region 18, 48 of the cooling plate 8, 38. Further, urethane foam, which is injected into the hollow region 18, 48, and which turns to foam and hardens inside the hollow region 18, 48, can be used as the plastic foam 9 in the cooling plate 8, 38 of the battery system of the present invention.

In the battery system above, unhardened plastic injected into the hollow region of the cooling plate turns to foam and expands. Therefore, cooling pipe is pressed more reliably against the surface plate by the expansion of the plastic foam.

In the battery system of the present invention, self-foaming plastic foam 9 can be used to fill the hollow region 18, 48 of the cooling plate 8, 38.

In this configuration, the thermal insulating properties of the plastic foam can be improved by using self-foaming plastic foam. Therefore, cooling pipe can be thermally insulated in an ideal fashion, and external heat absorption and reduced thermal efficiency can be prevented.

In the battery system of the present invention, cooling pipe 6, 36 can be configured with a cross-sectional shape having a flat section 6a, 36a, and this flat section 6a, 36a can be put in contact with the surface plate 8A, 38A.

In the configuration above, the contact area between the cooling pipe and the surface plate is increased, and the cooling pipe and surface plate can be thermally joined in a preferable arrangement. Furthermore, the cooling plate hollow region is filled with plastic foam while cooling pipe flat sections are in close contact with the surface plate. Close contact between the cooling pipe and surface plate can be made even more reliable due to the plastic foam.
The above and further objects of the present invention as well as the features thereof will become more apparent from the following detailed description to be made in conjunction with the accompanying drawings.

### BRIEF DESCRIPTION OF THE DRAWINGS

Fig. 1 is an abbreviated structural diagram of a battery system for one embodiment of the present invention;
Fig. 2 is a bottom oblique view of the battery system shown in Fig. 1;
Fig. 3 is a front view of the battery system shown in Fig. 1;
Fig. 4 is a lateral cross-section view of the battery system shown in Fig. 1;
Fig. 5 is an enlarged oblique view of an end region of the battery system shown in Fig. 1;
Fig. 6 is an exploded oblique view of the battery block of the battery system shown in Fig. 1;
Fig. 7 is an abbreviated structural diagram of a battery system for another embodiment of the present invention; and
Fig. 8 is a lateral cross-section view of the battery system shown in Fig. 7.

### DETAILED DESCRIPTION OF THE PREFERRED EMBODIMENTS

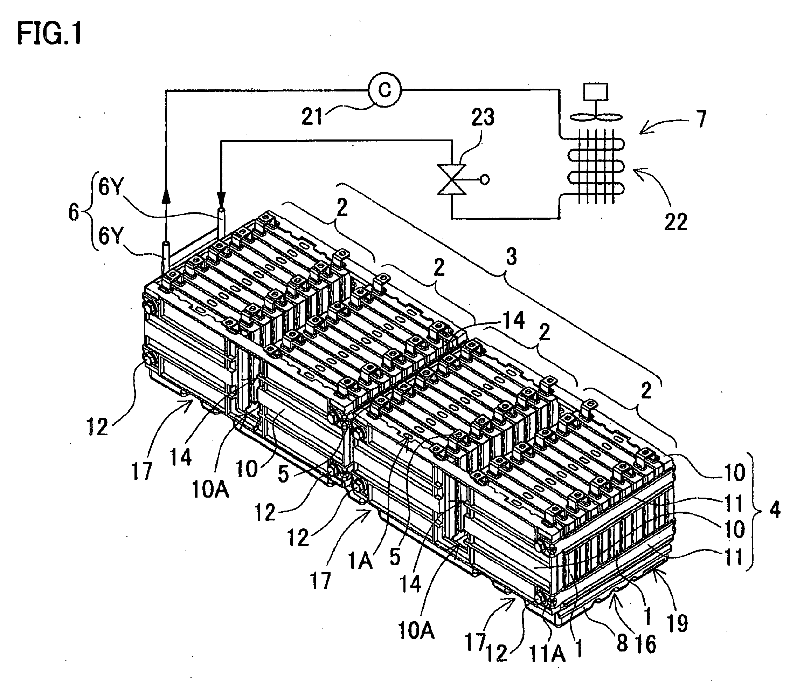

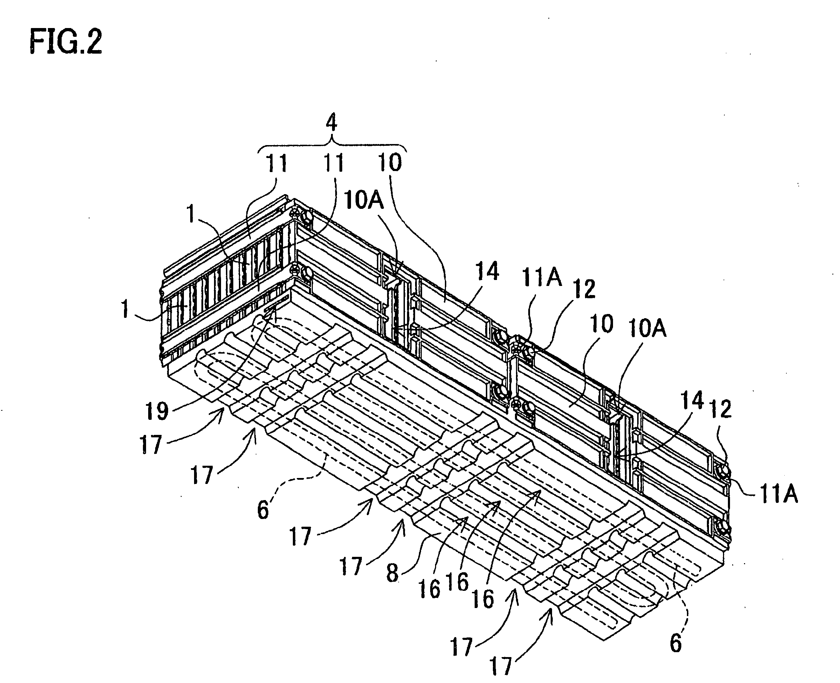

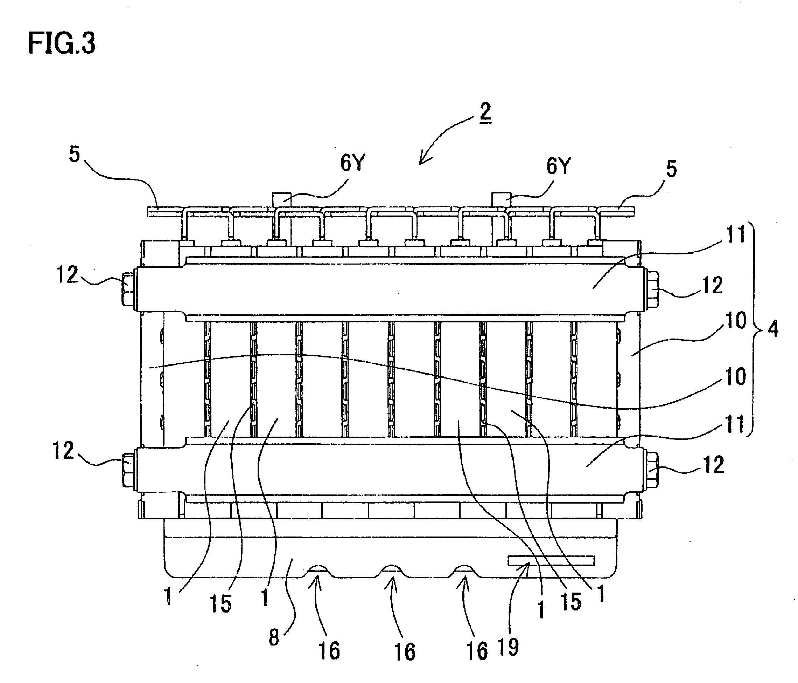

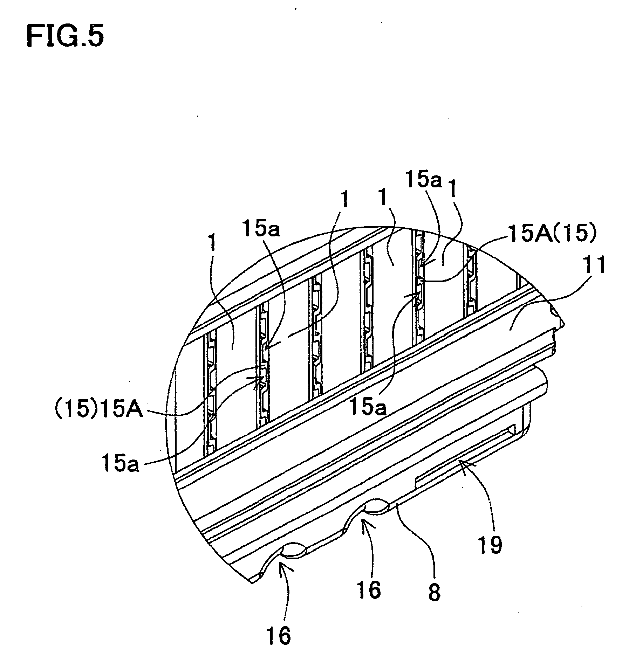

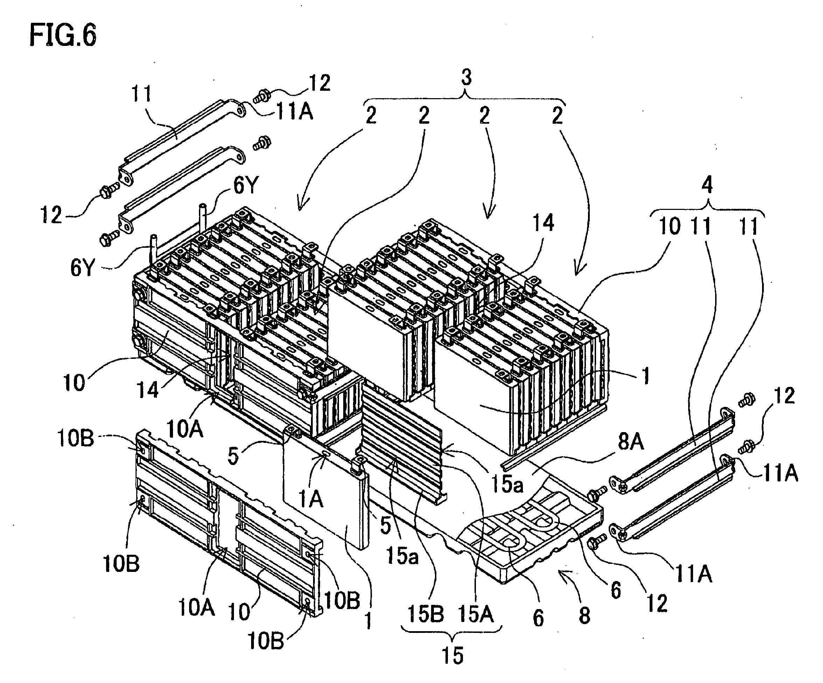

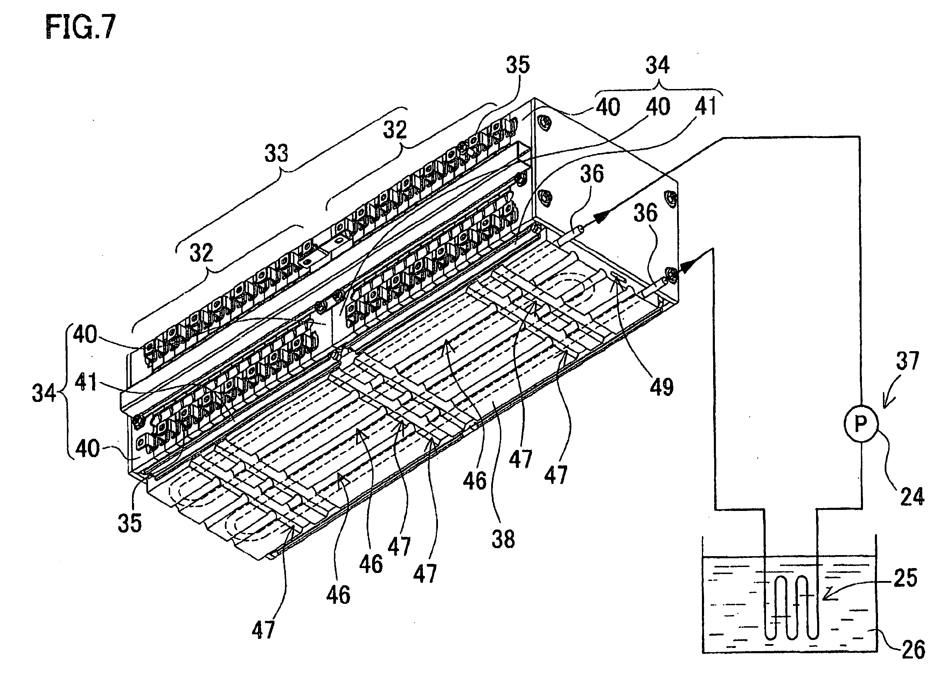

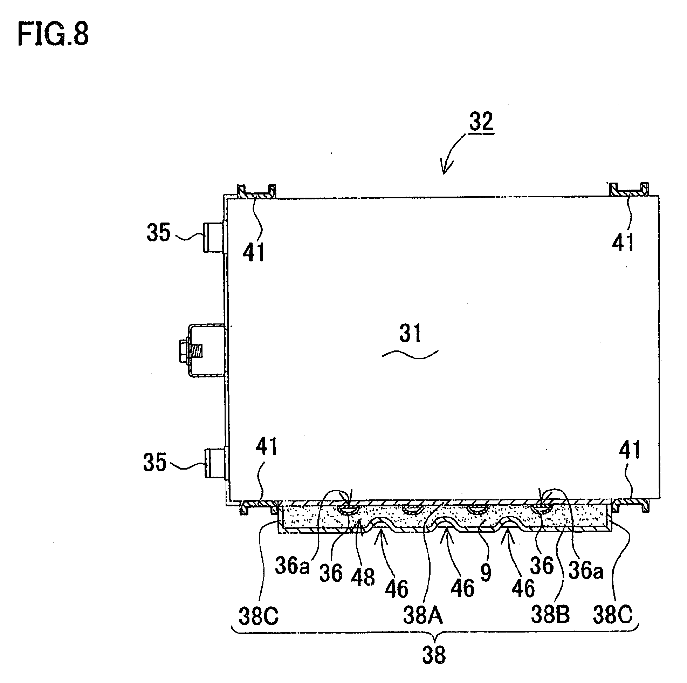

Figs. 1-6 show a first embodiment and Figs. 7 and 8 show a second embodiment of the present invention. The battery system shown in these figures is most suitable as a power source primarily for an electrically powered vehicle such as a hybrid car, which is driven by both an engine and an electric motor, or an electric automobile, which is driven by only an electric motor. However, the present invention can be used in vehicles other than a hybrid car or electric automobile, and it can also be used in applications that require large output other than electrically powered vehicles.

The battery systems of the following embodiments are provided with a battery block 3, 33 having a plurality of rectangular batteries 1, 31 that are wider than they are thick connected in a stacked configuration by a battery holder 4, 34; a cooling plate 8, 38 disposed in thermal contact with the bottom surface of the battery block 3, 33 and having a hollow region 18, 48 inside; cooling pipe 6, 36 disposed inside the hollow region 18, 48 of the cooling plate 8, 38; and a coolant supply device 7, 37 to supply coolant to the cooling pipe 6, 36.

In the battery system shown in Figs. 1-6, rectangular batteries 1 are assembled as four rows of battery units 2, which are retained by the battery holder 4. The four rows of battery units 2 each have the same number of rectangular batteries 1 stacked together. Since the battery block 3 of the figures has ten rectangular batteries 1 stacked in each battery unit 2, it is provided with a total of forty rectangular batteries 1. The battery block 3 is provided with ducts 14 for cooling gas ventilation between the four rows of battery units 2. The rectangular batteries 1 of the four battery units 2 are retained in parallel orientation by the battery holder 4. A rectangular battery 1 in one battery unit 2, which is opposite a rectangular battery 1 in an adjacent battery unit 2, lies in the same plane as its counterpart in the adjacent battery unit 2. However, in the battery system of the present invention, there is no requirement for the battery holder to hold four rows of battery units. For example, rectangular batteries can also be arranged in battery units of three rows or less, or five rows or more.

The battery block 3 has cooling spacers 15 sandwiched between the stacked rectangular batteries 1. The cooling spacers 15 are made of metal plate with superior thermal conductivity such as aluminum or copper. The surfaces of the rectangular batteries 1 are electrically insulated from intervening cooling spacers 15 by insulating material (not illustrated). Rectangular batteries 1 with electrically insulated surfaces can have external cases made of metal such as aluminum. Sandwiching cooling spacers 15, also made of metal, between those rectangular batteries 1 allows efficient and uniform cooling. An external battery case made of metal has superior thermal conduction, and allows the entire battery to efficiently attain a uniform temperature. A cooling spacer 15 has a vertical section 15A that makes thermal contact on both sides with adjacent rectangular battery 1 surfaces. A horizontal section 15B that makes thermal contact with the cooling plate 8 is established at the base of the vertical section 15A. The vertical section 15A of the cooling spacer 15 is shaped to mate with rectangular batteries 1 on both sides and align in a fixed location. As a result, rectangular batteries 1 and cooling spacers 15 can be stacked without shifting out of position. The bottom surface of the horizontal section 15B makes close contact with the surface plate 8A of the cooling plate 8 to enable efficient cooling by the cooling plate 8. In a battery system having this type of cooling spacers 15 sandwiched between rectangular batteries 1, rectangular batteries 1 can be efficiently cooled by the cooling spacers 15.

Both sides of the vertical sections 15A of the cooling spacers 15 of the figures are provided with a plurality of cooling channels 15a for forced cooling by a cooling gas. A cooling spacer 15 of this configuration is cooled by the cooling plate 8 and can also be cooled by cooling gas forced to pass through the cooling channels 15a. The battery system of Fig. 1 is provided with ducts 14 between battery units 2. Cooling gas is forced to pass through these ducts 14 and to pass through the cooling channels 15a of the cooling spacers 15. However, cooling spacers, which are cooled by thermal contact with the cooling plate, do not necessarily have to be cooled by a cooling gas. Consequently, cooling spacer vertical sections do not necessarily need cooling channels.

A battery system provided with cooling spacers 15 between rectangular batteries 1 can efficiently cool the rectangular batteries 1 via the cooling spacers 15. However, in the battery system of the present invention, cooling spacers do not necessarily have to be provided between the rectangular batteries. This is because the bottom surfaces of the rectangular batteries are cooled by the cooling plate. Instead of cooling spacers, electrically insulating spacers can be sandwiched between rectangular batteries. In this type of battery system, adjacent rectangular batteries are electrically insulated by insulating material. Insulating spacers can also be provided with cooling channels for cooling by a cooling gas.

As shown in the figures, a rectangular battery 1 is wider than it is thick or thinner than it is wide. Rectangular batteries 1 are stacked in the direction of their thin side to form a battery block 3. These rectangular batteries 1 are lithium ion rechargeable batteries. However, the rectangular batteries can also be other rechargeable batteries such as nickel hydride or nickel cadmium batteries. The rectangular batteries 1 of the figures have wide rectangular surfaces on both sides, and those wide surfaces are stacked opposite one-another to form a battery block 3. The upper surface of a rectangular battery 1 is provided with positive and negative electrode terminals 5 projecting upward at both ends, and a safety valve opening 1A is provided at the center of the upper surface. Each rectangular battery of the figures has its positive and negative electrode terminals 5 bent in opposite directions, and adjacent rectangular batteries 1 have their positive and negative electrode terminals 5 opposite each other and bent in opposite directions. In the battery system of the figures, positive and negative electrode terminals 5 of adjacent rectangular batteries 1 are joined with the batteries in a stacked configuration to connect the batteries in series. Although not illustrated, electrode terminals joined in the stacked configuration are connected by fasteners such as nuts and bolts. However, the positive and negative electrode terminals of the rectangular batteries can also be connected in series via bus bars. A battery system with adjacent rectangular batteries connected in series can increase output voltage to enable large output. However, the battery system can also have adjacent rectangular batteries connected in parallel.

A battery block 3 has stacked rectangular batteries 1 held in a battery holder 4. A battery block 3 of the figures has two rows of battery units 2 held in a battery holder 4. A battery holder 4 sandwiches two rows of battery units 2 within a pair of retaining plates 10. The retaining plates 10 are held together by connecting rails 11. The battery block 3 has retaining plates 10 disposed at both ends, the pair of retaining plates 10 are connected by connecting rails 11, and the stacked rectangular batteries 1 are held in the stacked configuration by the battery holder 4. A retaining plate 10 has a rectangular outline with approximately the same shape as two side-by-side rectangular batteries 1. A through-hole 10A is provided in the center region to open the retaining plate 10 for the duct established between adjacent battery units 2. An inward right-angle bend 11A is provided at both ends of each connecting rail 11 for attachment to the retaining plates 10 via screws 12.

The retaining plates 10 of the figures are provided with connecting, holes 10B to attach the right-angle bends 11A of the connecting rails 11. Each retaining plate 10 has four connecting holes 10B established at its four corners. Connecting holes 10B are formed to accept and mate with screws 12. Connecting rails 11 can be attached to the retaining plates 10 by screwing screws 12 through holes in the right-angle bends 11A into connecting holes 10B in the retaining plates 10.

The cooling plate 8 is disposed in thermal contact with the bottom surface of the battery block 3 to cool battery block 3 rectangular batteries 1 from below. In the battery system of the figures, a cooling plate 8 is disposed only under the bottom surface of the battery block 3 to cool it from below. However, in the battery system of the present invention, cooling can be implemented by a cooling plate disposed at the upper surface or side surface of the battery block in addition to the bottom surface. In particular, Figs 7 and 8 show a battery system with rectangular batteries 31 rotated onto their side to orient the positive and negative electrode terminal 35 surface as a side surface. Since rectangular battery 31 side surfaces become upper surfaces in this orientation, cooling plates 38 can be disposed at both the upper and lower surfaces to efficiently cool the rectangular batteries 31.

In the battery system of Figs. 7 and 8, rectangular batteries 31 are rotated onto their side and stacked in that orientation to form a battery unit 32. Two battery units 32 are joined in a straight line to form a single row battery block 33. Each battery unit 32 has a plurality of stacked rectangular batteries 31 held in place by a battery holder 34. The battery holder is made up of a pair of retaining plates 40 that sandwich the stacked rectangular batteries 31, and connecting rails 41 that join the retaining plates 40. Electrically insulating spacers (not illustrated) are sandwiched between rectangular batteries 31 of a battery unit 32, and adjacent rectangular batteries 31 are insulated by those insulating spacers. In this battery system, a cooling plate 38 is disposed under the bottom surface of the battery block 33 to cool the rectangular batteries 31. The cooling plate 38 of the figures is positioned at the bottom surface of the battery block 33, and makes direct contact and thermal connection with side surfaces of the rectangular batteries 31. In this configuration, the cooling plate 38 can make direct contact with rectangular battery 31 surfaces for efficient cooling. However, the battery system can also have cooling spacers sandwiched between rectangular batteries. These cooling spacers can make thermal contact with the surfaces of adjacent rectangular batteries on both sides to cool the batteries. A cooling spacer can be, for example, a spacer having a vertical section disposed between adjacent rectangular batteries and a horizontal section at the base of the vertical section for thermal contact with the cooling plate. In this cooling spacer, adjacent rectangular batteries are retained in fixed positions by the vertical section while the bottom surface of the horizontal section makes close contact with the cooling plate to allow effective cooling by the cooling plate. In addition, cooling spacers can be provided with a plurality of cooling channels, and rectangular batteries can be cooled by forced passage of cooling gas through those cooling channels.

In a battery system having a metal cooling plate 8, 38 and metal rectangular battery 1, 31 external cases, the cooling plate 8, 38 and rectangular batteries 1, 31 are thermally connected in an electrically insulated fashion. In the battery system of the figures, the external cases of rectangular batteries 1, 31 are covered with insulating material (not illustrated). Electrical insulation of rectangular batteries from the cooling plate can also be implemented by a configuration that covers the surface of the cooling plate opposite rectangular battery surfaces with insulating material. In this type of battery system, rectangular battery external cases are not insulated, adjacent rectangular batteries are insulated by insulating separators, and rectangular batteries are insulated from the cooling plate by insulating material provided on the surface of the cooling plate.

The cooling plate 8, 38 has a box-shape with a hollow region 18, 48 inside. The cooling plate 8, 38 has a surface plate 8A, 38A on top that makes thermal contact with the bottom surface of the battery block 3, 33. A bottom plate 8B, 38B is provided beneath the surface plate 8A, 38A. The surface plate 8A, 38A and bottom plate 8B, 38B have the same outline shape and are joined around the perimeter by side-walls 8C, 38C to form an enclosure that establishes the hollow region 18, 48. The cooling plate 8, 38 of the figures has its bottom plate 8B, 38B and side-walls 8C, 38C connected in a single-piece fashion. The surface plate 8A, 38A, the bottom plate 8B, 38B, and the side-walls 8C, 38C are made of metal plate. The surface plate 8A, 38A is made of metal plate having high thermal conductivity such as aluminum or copper. Since superior thermal conductivity characteristics are not required for the bottom plate 8B, 38B and side-walls 8C, 38C, they do not need to be made from metal plate and they can be made of plate material having low thermal conductivity such as plastic.

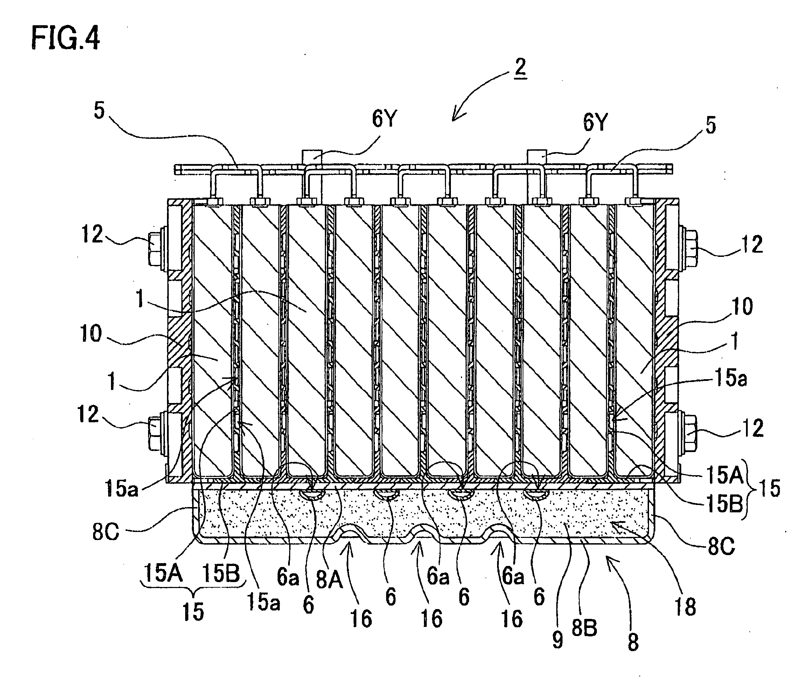

Cooling pipe 6, 36 is arranged inside the hollow region 18, 48 of the cooling plate 8, 38. Cooling pipe 6, 36 is made of high thermal conductivity metal such as aluminum or copper. Cooling pipe 6, 36 is disposed in contact with the inside of the surface plate 8A, 38A, and specifically, is disposed in thermal contact with the surface plate 8A, 38A. In a battery system having both the surface plate 8A, 38A and cooling pipe 6, 36 made of thin high thermal conductivity aluminum or copper, rectangular batteries 1, 31 can be efficiently cooled via a coolant. Cooling pipe 6, 36 shown in the cross-section views of Figs. 4 and 8 has a cross-sectional shape with a flat section 6a, 36a, and that flat section 6a, 36a attaches to the surface plate 8A, 38A making contact over a large area. In a cooling plate 8, 38 having cooling pipe 6, 36 with a flat section 6a, 36a that contacts the surface plate 8A, 38A, thermal contact area between the cooling pipe 6, 36 and surface plate 8A, 38A is increased and the surface plate 8A, 38A can be efficiently cooled by the cooling pipe 6, 36. In the cooling plate 8, 38 of Figs. 4 and 8, cooling pipe 6, 36 is disposed in contact with, and thermally connected with the surface plate 8A, 38A, and also separated from the bottom plate 8B, 38B. In this cooling plate 8, 38, the bottom plate 8B, 38B is not directly cooled by the cooling pipe 6, 36. Therefore, cooling pipe 6, 36 efficiently cools the surface plate 8A, 38A. The bottom plate 8B, 38B of the figures is provided with a plurality of lengthwise grooves 16, 46 and lateral grooves 17, 47. Fabrication of lengthwise and laterally extending grooves in the bottom plate 8B, 38B improves bending strength.

The hollow region 18, 48 of the cooling plate 8, 38 is filled with plastic foam 9. Except for the interior of the cooling pipe 6, 36, the entire hollow region 18, 48 is filled with plastic foam 9. In addition to thermally insulating the cooling pipe 6, 36, the plastic foam 9 also stabilizes the thermal connection between the cooling pipe 6, 36 and the surface plate 8A, 38A. This plastic foam 9 is injected into the hollow region 18, 48 with the cooling pipe 6, 36 in place, and hardens in a foam state. Unhardened plastic is injected into the hollow region 18, 48 through an injection hole 19, 49 at the bottom of the hollow region 18, 48. Unhardened plastic injected into the bottom of the hollow region 18, 48 is in the form of a paste or liquid. The injected plastic turns to foam and expands to fill the hollow region 18, 48. Conversion to foam and expansion of the plastic presses the cooling pipe 6, 36 into intimate contact with the surface plate 8A, 38A. In this state, the plastic hardens to become plastic foam 9. Urethane foam is used as the plastic foam 9 injected into the hollow region 18, 48 of the cooling plate 8, 38. Urethane foam is converted to foam under self-foaming (or independently foaming) conditions to fill the hollow region 18, 48 and press the cooling pipe 6, 36 against the surface plate 8A, 38A. Self-foaming plastic foam 9 forms independent bubbles without gas transfer, and therefore, achieves superior thermal insulating characteristics. In addition, cooling pipe 6, 36 is pressed against the surface plate 8A, 38A due to pressure created by gas included within independent foam bubbles, and this puts the cooling pipe 6, 36 reliably in close contact with the surface plate 8A, 38A to improve the thermal connection.

The cooling plate 8 shown in Figs. 1-4 has both ends of the cooling pipe 6 disposed inside the hollow region 18 pulled-out one end of the cooling plate 8. These pulled-out sections are bent upwards to establish coolant plumbing access points 6Y. Cooling pipe 6 is connected to a coolant supply device 7 via these plumbing access points 6Y.

A coolant supply device 7, 37 supplies coolant to the cooling pipe. Coolant that chills the cooling pipe by the heat of vaporization, and cooled liquid such as water or oil that cools the cooling pipe are both used. As shown in Fig. 1, a coolant supply device 7 that supplies coolant to chill the cooling pipe by the heat of vaporization is provided with a compressor 21 to pressurize coolant discharged from the cooling pipe 6 in the gas state, a condenser 22 to chill and liquefy coolant gas pressurized by the compressor 21, and an expansion valve 23 to supply coolant liquefied by the condenser 22 to the cooling pipe 6. Coolant supplied by the expansion valve 23 of this coolant supply device 7 vaporizes within the cooling pipe 6 to chill the cooling pipe 6 with a large heat of vaporization. Consequently, the cooling pipe 6 can be efficiently chilled to a low temperature.

As shown in Fig. 7, a coolant supply device 37 that uses cooled water or oil as coolant is provided with a circulation pump 24 to circulate the coolant such as water or oil, and a heat exchanger 25 to cool the coolant circulated by the circulation pump 24. The circulation pump 24 circulates coolant between the cooling pipe 36 and heat exchanger 25. The heat exchanger 25 cools the circulating coolant. For example, the heat exchanger 25 cools the coolant by forced ventilation of cooling air, or by immersion of the heat exchanger 25 in cooling liquid 26.

It should be apparent to those with an ordinary skill in the art that while various preferred embodiments of the invention have been shown and described, it is contemplated that the invention is not limited to the particular embodiments disclosed, which are deemed to be merely illustrative of the inventive concepts and should not be interpreted as limiting the scope of the invention, and which are suitable for all modifications and changes falling within the scope of the invention as defined in the appended claims. The present application is based on Application No. 2007-309000 filed in Japan on November 29, 2007.

## Claims

1. A battery system cooled via coolant comprising:
a battery block (3) having a plurality of rectangular batteries held in a stacked fashion by a battery holder (4);
a cooling plate (8, 38) disposed in thermal contact with the bottom surface of the battery block (3) and having a hollow region inside;
cooling pipe (6, 36) disposed within the cooling plate (8, 38) hollow region; and
a coolant supply device (7) to supply coolant to the cooling pipe (6, 36); wherein
the hollow cooling plate (8, 38) has a surface plate (8A, 38A) that makes thermal contact with the bottom surface of the battery block (3); and
the cooling pipe (6, 36) is disposed inside the hollow region in contact with the inside of the surface plate (8A, 38A);
**characterized in that**:
the hollow region of the cooling plate (8, 38) is filled with plastic foam;
the battery block (3) has cooling spacers (15) sandwiched between stacked rectangular batteries (1), and those cooling spacers (15) are sheet metal;
the rectangular batteries (1) with intervening the sheet metal cooling spacers (15) have electrically insulated surfaces; and
each cooling spacer (15) is provided with a vertical section (15A) that makes thermal contact on both sides with adjacent rectangular battery (1) surfaces, and a horizontal section (15B) at the base of the vertical section (15A) that makes thermal contact with the cooling plate (8); and this horizontal section (15B) makes contact with the surface plate (8A) of the cooling plate (8).

2. The battery system as cited in claim 1 **characterized in that** the plastic foam that fills the hollow region of the cooling plate (8, 38) is urethane foam.

3. The battery system as cited in claim 2 **characterized in that** the plastic foam that fills the hollow region of the cooling plate (8, 38) is urethane foam, which is injected into the hollow region, and which turns to foam and hardens inside the hollow region.

4. The battery system,as cited in any of the claims 1 through 3 **characterized in that** the plastic foam that fills the hollow region of the cooling plate (8, 38) has independently foaming gas bubbles.

5. The battery system as cited in any of the claims 1 through 4 **characterized in that** cooling pipe (6, 36) has a cross-sectional shape with a flat section, and that flat section contacts the surface plate (8A, 38A).

6. The battery system as cited in any of the claims 1 through 5 **characterized in that** the battery system is an electric vehicle power source.

7. The battery system as cited in claim 6 **characterized in that** the battery system is a hybrid car power source.

8. The battery system as cited in any of the claims 1 through 7 **characterized in that** the battery block (3) is provided with a plurality of rows of battery units (2), and cooling gas ventilation ducts (14) are established between the rows of battery units (2).

9. The battery system as cited in any of the claims 1 through 8 **characterized in that** a plurality of cooling channels (15a) are provided on both sides of the vertical section (15A) of each cooling spacer (15) for forced cooling by a cooling gas.

10. The battery system as cited in claim 9 **characterized in that** the battery block (3) is provided with a plurality of rows of battery units (2); cooling gas ventilation ducts (14) are established between the rows of battery units (2); cooling channels (15a) connect with the ducts (14); and forced cooling proceeds from the ducts (14) to the cooling spacer (15) cooling channels (15a).

11. The battery system as cited in any of the claims 1 through 10 **characterized in that** the rectangular batteries are lithium ion batteries.

12. The battery system as cited in any of the claims 1 through 10 **characterized in that** the rectangular batteries are nickel hydride batteries.

13. The battery system as cited in any of the claims 1 through 12 **characterized in that** the cooling plate (8) is disposed to make thermal contact with the bottom surface of the battery block (3).

14. The battery system as cited in any of the claims 1 through 13 **characterized in that** rectangular battery (1, 31) external cases and the cooling plate (8, 38) are made of metal, and the cooling plate (8, 38) and rectangular batteries (1, 31) make thermal contact in an electrically insulated fashion.

15. The battery system as cited in any of the claims 1 through 14 **characterized in that** the surface plate (8A, 38A) of the cooling plate (8, 38) is a metal plate.

16. The battery system as cited in claim 15 **characterized in that** the surface plate (8A, 38A) is aluminum.

17. The battery system as cited in claim 15 **characterized in that** the surface plate (8A, 38A) is copper.

18. The battery system as cited in any of the claims 1 through 17 **characterized in that** the cooling plate (8, 38) has a hollow region (18, 48) inside, a surface plate (8A, 38A) as an upper surface that makes thermal contact with the bottom surface of the battery block (3, 33), and a bottom plate (8B, 38B) disposed beneath the surface plate (8A, 38A); and cooling pipe (6, 36) is disposed in contact, and thermally joined with the surface plate (8A, 38A) while separated from the bottom plate (8B, 38B).

## Patentansprüche

1. Batteriesystem, gekühlt über ein Kühlmittel, umfassend:
einen Batterieblock (3), aufweisend eine Vielzahl Rechteck-Batterien, gehalten in einer geschichteten Weise durch eine Batteriehalterung (4);
eine Kühlplatte (8, 38), angeordnet in thermischem Kontakt mit der Bodenfläche des Batterieblocks (3) und aufweisend eine Hohlregion innenseitig;
Kühlröhre (6, 36), angeordnet in der Kühlplatten- (8, 38) Hohlregion; und
eine Kühlmittelzuführvorrichtung (7), um Kühlmittel an die Kühlröhre (6, 36) zu liefern; wobei
die hohle Kühlplatte (8, 38) eine Oberflächen-Platte (8A, 38A) aufweist, die thermischen Kontakt mit der Bodenfläche des Batterieblocks (3) ausbildet; und
die Kühlröhre (6, 36) angeordnet ist in der Hohlregion in Kontakt mit der Innenseite der Oberflächen-Platte (8A, 38A);
**dadurch gekennzeichnet, dass:**
die Hohlregion der Kühlplatte (8, 38) mit Schaumkunststoff gefüllt ist;
der Batterieblock (3) Kühlabstandshalter (15) aufweist, sandwichartig angeordnet zwischen geschichteten Rechteck-Batterien (1), und diese Kühlabstandshalter (15) aus Blech sind;
die Rechteck-Batterien (1) mit intervenierend die Blechkühlabstandshalter (15) elektrisch isolierte Oberflächen aufweisen; und
jeder Kühlabstandshalter (15) bereitgestellt ist mit einer vertikalen Sektion (15A), die thermischen Kontakt an beiden Seiten mit benachbarten Rechteck-Batterie- (1) Oberflächen ausbildet, und einer horizontalen Sektion (15B) an der Basis der vertikalen Sektion (15A), die thermischen Kontakt mit der Kühlplatte (8) ausbildet; und diese horizontale Sektion (15B) Kontakt mit der Oberflächen-Platte (8A) der Kühlplatte (8) ausbildet.

2. Batteriesystem gemäß Anspruch 1, **dadurch gekennzeichnet, dass** der Schaumkunststoff, der die Hohlregion der Kühlplatte (8, 38) füllt, Urethanschaum ist.

3. Batteriesystem gemäß Anspruch 2, **dadurch gekennzeichnet, dass** der Schaumkunststoff, der die Hohlregion der Kühlplatte (8, 38) füllt, Urethanschaum ist, der eingespritzt wird in die Hohlregion, und der aufschäumt und härtet in der Hohlregion.

4. Batteriesystem gemäß einem der Ansprüche 1 bis 3, **dadurch gekennzeichnet, dass** der Schaumkunststoff, der die Hohlregion der Kühlplatte (8, 38) füllt, unabhängig geschäumte Gasblasen aufweist.

5. Batteriesystem gemäß einem der Ansprüche 1 bis 4, **dadurch gekennzeichnet, dass** die Kühlröhre (6, 36) eine Querschnittsform mit einer flachen Sektion aufweist und diese flache Sektion die Oberflächen-Platte (8A, 38A) kontaktiert.

6. Batteriesystem gemäß einem der Ansprüche 1 bis 5, **dadurch gekennzeichnet, dass** das Batteriesystem eine Elektrofahrzeugenergiequelle ist.

7. Batteriesystem gemäß Anspruch 6, **dadurch gekennzeichnet, dass** das Batteriesystem eine Hybridautomobilenergiequelle ist.

8. Batteriesystem gemäß einem der Ansprüche 1 bis 7, **dadurch gekennzeichnet, dass** der Batterieblock (3) bereitgestellt ist mit einer Vielzahl von Reihen von Batterieeinheiten (2), und Kühlgasventilationsrohre (14) zwischen den Reihen von Batterieeinheiten (2) vorgesehen sind.

9. Batteriesystem gemäß einem der Ansprüche 1 bis 8, **dadurch gekennzeichnet, dass** eine Vielzahl von Kühlkanälen (15a) bereitgestellt sind an beiden Seiten der vertikalen Sektion (15A) von jedem Kühlabstandshalter (15) zum beaufschlagten Kühlen durch ein Kühlgas.

10. Batteriesystem gemäß Anspruch 9, **dadurch gekennzeichnet, dass** der Batterieblock (3) bereitgestellt ist mit einer Vielzahl von Reihen von Batterieeinheiten (2); Kühlgasventilationsrohre (14) vorgesehen sind zwischen den Reihen von Batterieeinheiten (2); Kühlkanäle (15a) sich verbinden mit den Rohren (14); und beaufschlagte Kühlung voranschreitet von den Rohren (14) zu den Kühlabstandshalter- (15) Kühlkanälen (15a).

11. Batteriesystem gemäß einem der Ansprüche 1 bis 10, **dadurch gekennzeichnet, dass** die Rechteck-Batterien Lithiumionenbatterien sind.

12. Batteriesystem gemäß einem der Ansprüche 1 bis 10, **dadurch gekennzeichnet, dass** die Rechteck-Batterien Nickelhydridbatterien sind.

13. Batteriesystem gemäß einem der Ansprüche 1 bis 12, **dadurch gekennzeichnet, dass** die Kühlplatte (8) angeordnet ist, um thermischen Kontakt mit der Bodenfläche des Batterieblocks (3) auszubilden.

14. Batteriesystem gemäß einem der Ansprüche 1 bis 13, **dadurch gekennzeichnet, dass** Rechteck-Batterie- (1, 31) externe Gehäuse und die Kühlplatte (8, 38) ausgebildet sind aus Metall und die Kühlplatte (8, 38) und Rechteck-Batterien (1, 31) thermischen Kontakt auf eine elektrisch isolierte Weise ausbilden.

15. Batteriesystem gemäß einem der Ansprüche 1 bis 14, **dadurch gekennzeichnet, dass** die Oberflächen-Platte (8A, 38A) der Kühlplatte (8, 38) ein Metallplatte ist.

16. Batteriesystem gemäß Anspruch 15, **dadurch gekennzeichnet, dass** die Oberflächen-Platte (8A, 38A) Aluminium ist.

17. Batteriesystem gemäß Anspruch 15, **dadurch gekennzeichnet, dass** die Oberflächen-Platte (8A, 38A) Kupfer ist.

18. Batteriesystem gemäß einem der Ansprüche 1 bis 17, **dadurch gekennzeichnet, dass** die Kühlplatte (8, 38) eine Hohlregion (18, 48) innenseitig aufweist, eine Oberflächen-Platte (8A, 38A) als eine obere Oberfläche, die thermischen Kontakt mit der Bodenfläche des Batterieblocks (3, 33) ausbildet, und eine Bodenplatte (8B, 38B), angeordnet unter der Oberflächen-Platte (8A, 38A); und Kühlröhre (6, 36) kontaktierend angeordnet ist und thermisch verbunden mit der Oberflächen-Platte (8A, 38A), während separiert von der Bodenplatte (8B, 38B).

## Revendications

1. Système de batteries refroidi par un agent de refroidissement comprenant :
un bloc de batteries (3) comportant une pluralité de batteries rectangulaires maintenues en étant empilées par un support de batteries (4) ;
une plaque de refroidissement (8, 38) disposée en contact thermique avec la surface inférieure du bloc de batteries (3) et comportant une région creuse à l'intérieur de celle-ci ;
un tuyau de refroidissement (6, 36) disposé dans la région creuse de la plaque de refroidissement (8, 38) ; et
un dispositif d'alimentation en agent de refroidissement (7) pour délivrer un agent de refroidissement au tuyau de refroidissement (6, 36) ; dans lequel
la plaque de refroidissement (8, 38) creuse comporte une plaque de surface (8A, 38A) qui est en contact thermique avec la surface inférieure du bloc de batteries (3) ; et
le tuyau de refroidissement (6, 36) est disposé à l'intérieur de la région creuse en contact avec l'intérieur de la plaque de surface (8A, 38A) ; **caractérisé en ce que** :
la région creuse de la plaque de refroidissement (8, 38) est remplie de mousse plastique ;
le bloc de batteries (3) comporte des éléments d'espacement de refroidissement (15) intercalés entre les batteries (1) rectangulaires empilées, et ces éléments d'espacement de refroidissement (15) sont en tôle ;
les batteries (1) rectangulaires avec les éléments d'espacement de refroidissement (15) en tôle intercalés comportent des surfaces électriquement isolées ; et
chaque élément d'espacement de refroidissement (15) est pourvu d'une section verticale (15A) qui est en contact thermique des deux côtés avec les surfaces de batteries (1) rectangulaires adjacentes, et une section horizontale (15B) à la base de la section verticale (15A) qui est en contact thermique avec la plaque de refroidissement (8) ; et cette section horizontale (15B) est en contact avec la plaque de surface (8A) de la plaque de refroidissement (8).

2. Système de batteries selon la revendication 1, **caractérisé en ce que** la mousse plastique qui remplit la région creuse de la plaque de refroidissement (8, 38) est une mousse d'uréthane.

3. Système de batteries selon la revendication 2, **caractérisé en ce que** la mousse plastique qui remplit la région creuse de la plaque de refroidissement (8, 38) est une mousse d'uréthane, qui est injectée dans la région creuse, et qui se transforme en mousse et durcit à l'intérieur de la région creuse.

4. Système de batteries selon l'une quelconque des revendications 1 à 3, **caractérisé en ce que** la mousse plastique qui remplit la région creuse de la plaque de refroidissement (8, 38) comporte des bulles de gaz qui forment de la mousse de manière indépendante.

5. Système de batteries selon l'une quelconque des revendications 1 à 4, **caractérisé en ce que** le tuyau de refroidissement (6, 36) a une forme en coupe avec une section plate, et cette section plate est en contact avec la plaque de surface (8A, 38A).

6. Système de batteries selon l'une quelconque des revendications 1 à 5, **caractérisé en ce que** le système de batteries est une source de puissance de véhicule électrique.

7. Système de batteries selon la revendication 6, **caractérisé en ce que** le système de batteries est une source de puissance de voiture hybride.

8. Système de batteries selon l'une quelconque des revendications 1 à 7, **caractérisé en ce que** le bloc de batteries (3) est pourvu d'une pluralité de rangées d'unités de batteries (2), et des conduites de ventilation de gaz de refroidissement (14) sont établies entre les rangées d'unités de batteries (2).

9. Système de batteries selon l'une quelconque des revendications 1 à 8, **caractérisé en ce qu'**une pluralité de canaux de refroidissement (15a) sont prévus des deux côtés de la section verticale (15A) de chaque élément d'espacement de refroidissement (15) pour un refroidissement forcé par un gaz de refroidissement.

10. Système de batteries selon la revendication 9, **caractérisé en ce que** le bloc de batteries (3) est pourvu d'une pluralité de rangées d'unités de batteries (2) ; des conduites de ventilation de gaz de refroidissement (14) sont établies entre les rangées d'unités de batteries (2) ; des canaux de refroidissement (15a) sont reliés aux conduites (14) ; et un refroidissement forcé agit des conduites (14) vers les canaux de refroidissement (15a) des éléments d'espacement de refroidissement (15).

11. Système de batteries selon l'une quelconque des revendications 1 à 10, **caractérisé en ce que** les batteries rectangulaires sont des batteries ion-lithium.

12. Système de batteries selon l'une quelconque des revendications 1 à 10, **caractérisé en ce que** les batteries rectangulaires sont des batteries NiMH.

13. Système de batteries selon l'une quelconque des revendications 1 à 12, **caractérisé en ce que** la plaque de refroidissement (8) est disposée de manière à être en contact thermique avec la surface inférieure du bloc de batteries (3).

14. Système de batteries selon l'une quelconque des revendications 1 à 13, **caractérisé en ce que** les boîtiers externes des batteries (1, 31) rectangulaires et la plaque de refroidissement (8, 38) sont réalisés en métal, et la plaque de refroidissement (8, 38) et les batteries (1, 31) rectangulaires sont en contact thermique de manière électriquement isolées.

15. Système de batteries selon l'une quelconque des revendications 1 à 14, **caractérisé en ce que** la plaque de surface (8A, 38A) de la plaque de refroidissement (8, 38) est une plaque métallique.

16. Système de batteries selon la revendication 15, **caractérisé en ce que** la plaque de surface (8A, 38A) est en aluminium.

17. Système de batteries selon la revendication 15, **caractérisé en ce que** la plaque de surface (8A, 38A) est en cuivre.

18. Système de batteries selon l'une quelconque des revendications 1 à 17, **caractérisé en ce que** la plaque de refroidissement (8, 38) comporte une région creuse (18, 48) à l'intérieur de celle-ci, une plaque de surface (8A, 38A) en tant que surface supérieure qui est en contact thermique avec la surface inférieure du bloc de batteries (3, 33), et une plaque inférieure (8B, 38B) disposée au-dessous de la plaque de surface (8A, 38A) ; et un tuyau de refroidissement (6, 36) est disposé en contact avec la plaque de surface (8A, 38A) et joint thermiquement à celle-ci tout en étant séparé de la plaque inférieure (8B, 38B).
